# EUROPÄISCHE PATENTSCHRIFT

(11) **EP 2 020 552 B1**
(45) Veröffentlichungstag und Bekanntmachung des Hinweises auf die Patenterteilung: **25.07.2012**
(21) Anmeldenummer: 08104943.9
(22) Anmeldetag: 01.08.2008
(51) Int. Cl.: F16L 13/14

(54) **Anordnung aus einem rohrförmigen Bauteil und einem Anschlussstück**
Arrangement of a tube and a connector
Arrangement d'un tube et d'un connecteur

(30) Priorität: 01.08.2007 DE 102007036504
(43) Veröffentlichungstag der Anmeldung: 04.02.2009
(73) Patentinhaber: VIEGA GmbH & Co. KG, 57439 Attendorn (DE)
(72) Erfinder: Sinoplu, Sudi, 57439 Attendorn (DE)
(74) Vertreter: Rox, Thomas

(56) Entgegenhaltungen:
- EP-A- 1 265 018
- DE-U1-202006 010 350

## Beschreibung

Die Erfindung betrifft eine Anordnung mit einem ein Profil aufweisenden Endstück und mit einer an dem Endstück angeordneten Nut zur Aufnahme eines Dichtungselements.

Rohrförmige Bauteile der vorstehend genannten Art sind bereits bekannt, z.B. aus EP 1 265 018 A1. Insbesondere sind die rohrförmigen Bauteile, die mit verschiedenen anderen Bauteilen zu einem Gesamtsystem zusammengesetzt werden können, zur Führung von gasförmigen oder flüssigen Fluiden vorgesehen. Die Führung eines Fluids in dem Gesamtsystem wird üblicherweise durch Erzeugen einer Druckdifferenz zwischen bestimmten Punkten des Gesamtsystems bewirkt.

Die ein Profil aufweisenden Endstücke der rohrförmigen Bauteile sind dazu vorgesehen, in ein Anschlussstück eingesteckt zu werden. Anschlussstücke können dabei Armaturen, Muffen sowie auch beliebige andere rohrförmige Bauteile sein. Im Überlappungsbereich des Anschlussstücks und des in das Anschlussstück eingreifenden Endstücks des rohrförmigen Bauteils, werden das Anschlussstück und das Endstück des rohrförmigen Bauteils üblicherweise kalt verformt, um so eine fluiddichte, kraftschlüssige Verbindung zwischen Anschlussstück und rohrförmigem Bauteil zu schaffen.

Nach der Verformung liegt das Dichtungselement, das üblicherweise als O-Ring ausgebildet ist, an der Innenumfangsfläche des Anschlussstücks und an der Außenumfangsfläche des Endstücks des rohrförmigen Bauteils, insbesondere in der Nut, eng an und dichtet so das Innere des rohrförmigen Bauteils bzw. das Innere des Anschlussstücks gegen die Umgebung ab.

Häufig werden das Anschlussstück, das Endstück des rohrförmigen Bauteils und das Dichtungselement so ausgebildet, dass das Eingreifen des Endstücks in das Anschlussstück vor dem Verformen gezielt noch keine fluiddichte Verbindung bewirkt. Üblicherweise wird dies dadurch erreicht, dass der Abstand zwischen dem Nutgrund an dem Endstück und der gegenüberliegenden Innenumfangsfläche des Anschlussstücks größer als die Dicke eines in der Nut angeordneten Dichtungselements ist. Mit anderen Worten ist vor der Verformung zwischen der Innenumfangsfläche des Anschlussstücks und der Außenumfangsfläche des Endstücks des rohrförmigen Bauteils, insbesondere des in der Nut angeordneten Dichtungselements, ein Spalt vorgesehen, der eine Leckage an der Verbindung zwischen rohrförmigem Bauteil und Anschlussstück vor der Verformung bewirkt. Damit kann beispielsweise ein Installateur auf eine fehlende Verformung aufmerksam gemacht werden oder einem Installateur kann zumindest die Möglichkeit gegeben werden, eine fehlende Verformung mit einfachen Mitteln festzustellen.

Insbesondere bei druckgeführten Fluiden kann es jedoch geschehen, dass das Fluid, das vor dem Verformen durch den vorstehend beschriebenen Spalt entweicht, solche Druckverhältnisse in dem Spalt und um den Spalt herum erzeugt, dass das Dichtungselement aus seiner vorgesehenen Position in der Nut zumindest temporär ausgelenkt, gegebenenfalls gedehnt oder gestaucht, wird und dann den Spalt abdichtet, obwohl die Verformung des Anschlussstücks und des in das Anschlussstück eingreifenden Endstücks des rohrförmigen Bauteils noch nicht vorgenommen wurde. In diesem Fall wäre die gezielte Leckage vor dem Verformen verhindert, und einem Installateur wäre das Auffinden einer nicht verformten Verbindung zwischen einem Anschlussstück und einem rohrförmigen Bauteil erschwert.

Der vorliegenden Erfindung liegt daher das technische Problem zu Grunde, eine Anordnung anzugeben, das vor dem Verformen eine zuverlässigere Leckage gewährleistet und insbesondere eine druckbewirkte, temporäre Abdichtung vermeidet.

Gelöst wird das technische Problem durch eine Anordnung nach Anspruch 1.

Erfindungsgemäß wurde erkannt, dass eine gezielte Leckage vor dem Verformen gewährleistet werden kann, wenn ein Ausweichkanal an dem Endstück des rohrförmigen Bauteils angeordnet wird, durch den das druckbeaufschlagte Fluid entweichen kann, wenn das Dichtungselement auf Grund der Druckverhältnisse aus seiner vorgesehenen Position in der Nut ausgelenkt werden sollte. Dieser Ausweichkanal wird erfindungsgemäß durch eine Ausnehmung, die kreisförmig, oval, eckig, keilförmig oder wellenförmig sein kann, in der dem offenen Ende des Endstücks zugewandten Nutwand erzeugt. Gemeint ist also die Nutwand, die auf der dem offenen Ende des Endstücks abgewandten Seite des Nutgrundes angeordnet ist. Durch die Anordnung der Ausnehmung in der Nutwand wird eine sehr raumsparende Möglichkeit geschaffen, einen Ausweichkanal bereitzustellen.

Durch die Ausnehmung kann eine Verbindung zwischen der Nut und dem Spalt zwischen der Innenumfangsfläche eines Anschlussstücks und der Außenumfangsfläche des Endstücks geschaffen werden, durch die das Fluid entweichen kann, wenn das Dichtungselement aus seiner vorgesehenen Position in der Nut ausgelenkt wird. Denn in diesem Fall wird die Öffnung der Ausnehmung in der Nutwand, die vorher von dem Dichtungselement bedeckt wurde, zumindest teilweise bloßgelegt.

Das Einarbeiten der Ausnehmung in die Nutwand ist mit geringem Zeitaufwand und mit einfachen technischen Mitteln durchführbar. So kann die Ausnehmung in die Nutwand mittels eines Stempels eingedrückt werden. Die Ausnehmung kann aber natürlich auch herausgefräst oder mittels gezielter Wärmeeinwirkung, beispielsweise durch einen Laserstrahl, herausgearbeitet oder auch herausgeschmolzen werden. Es ist weiterhin möglich, herkömmliche rohrförmige Bauteile nachträglich mit einer Ausnehmung in der dem offenen Ende des Endstücks des rohrförmigen Bauteils zugewandten Nutwand zu versehen.

Die Form der Ausnehmung ist grundsätzlich beliebig wählbar. Die Ausnehmung kann beispielsweise eine in die Nutwand eingearbeitete Kerbe sein. Vorzugsweise weist die Ausnehmung eine Öffnungsbreite zur Nut auf, die geringer als die Dicke des Dichtungselements ist. Damit kann verhindert werden, dass das Dichtungselement, noch nicht einmal teilweise, in die Ausnehmung ausgelenkt wird. Es ist auch möglich, die Ausnehmung mit einer Hinterschneidung auszubilden. Entscheidend ist jedoch, dass die Ausnehmung als Ausweichkanal für das Fluid wirken kann.

In einer bevorzugten Ausgestaltung des rohrförmigen Bauteils sind das Profil und die Nut an der Außenfläche des Endstücks ausgebildet. Damit kann das Endstück in ein Anschlussstück eingreifen, das später zu einer fluiddichten, kraftschlüssigen Verbindung kalt verformt werden kann. Da die Nut und das Profil an der Außenfläche des Endstücks ausgebildet sind, ist die dem offenen Ende des Endstücks zugewandte Nutwand sehr einfach für Werkzeuge erreichbar, um dort die Ausnehmung einzuarbeiten.

Weiterhin ist es bevorzugt, dass das rohrförmige Bauteil aus einem Kunststoff ausgebildet ist. Kunststoffe weisen eine hohe Widerstandsfähigkeit und Gewichtsvorteile insbesondere gegenüber Metallen oder Metall-Legierungen auf. Darüberhinaus können komplexere Geometrien einfacher abgebildet werden.

In einer weiteren bevorzugten Ausgestaltung weist die Nutwand mindestens zwei voneinander beabstandete Ausnehmungen auf. Somit kann eine gezielte Leckage vor dem Verformen noch zuverlässiger gewährleistet werden. So können beispielsweise zwei Ausnehmungen an der Nutwand diametral voneinander beabstandet angeordnet sein.

Ferner ist das Endstück vorzugsweise für einen Leitungsdruck von mindestens 4 bar ausgelegt. Bei diesen Drücken ist die Gefahr, dass ein Dichtungselement aus seiner vorgesehenen Position in der Nut ausgelenkt wird und damit die gezielte Leckage einer noch nicht verformten Verbindung zwischen einem rohrförmigen Bauteil, wie es üblicherweise gebraucht wird, und einem Anschlussstück abdichtet, besonders groß. Aber natürlich können die rohrförmigen Bauteile auch verwendet werden, wenn ein geringerer Leitungsdruck vorgesehen ist.

Im Folgenden wird die Erfindung an Hand von in einer Zeichnung dargestellten Ausführungsbeispielen näher erläutert. In der Zeichnung zeigen:
- Fig. 1: ein rohrförmiges Bauteil, wie es aus dem Stand der Technik bekannt ist, vor der Verformung in einem Seitenquerschnitt,
- Fig. 2: das rohrförmige Bauteil aus Fig. 1 vor der Verformung in einem Seitenquerschnitt, wenn das Dichtungselement aus seiner vorgesehenen Position in der Nut ausgelenkt ist,
- Fig. 3: ein Ausführungsbeispiel der Anordnung vor der Verformung des rohrförmigen Bauteils in einem Seitenquerschnitt,
- Fig. 4: das Ausführungsbeispiel aus Fig. 3, wenn das Dichtungselement aus seiner vorgesehenen Position in der Nut ausgelenkt ist,
- Fig. 5: eine isometrische Ansicht eines Ausführungsbeispiels der Anordnung
- Fig. 6: die Ansicht aus Fig. 3 mit Hülse und Haltering und
- Fig. 7a und 7b: die Ansicht aus Fig. 6 nach der Verformung.

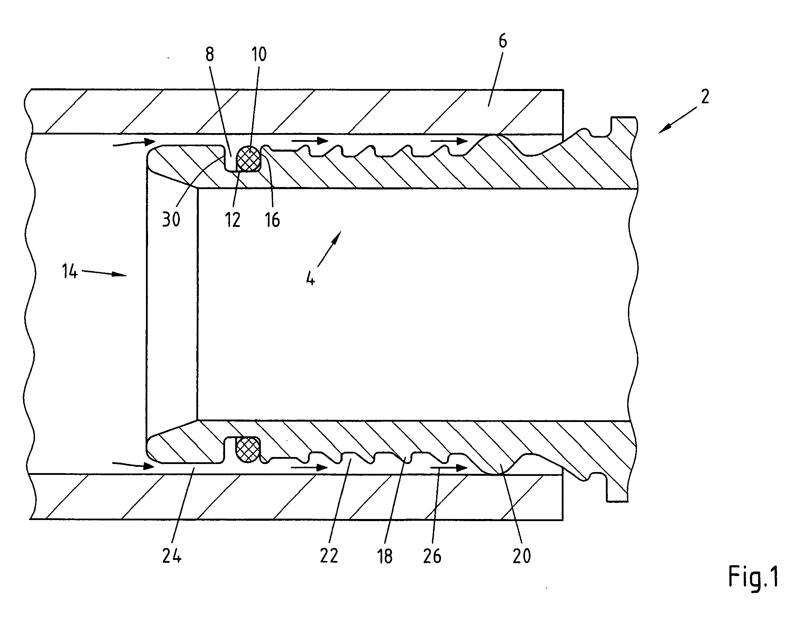

Fig. 1 zeigt ein rohrförmiges Bauteil 2 mit einem ein Profil aufweisenden Endstück 4 bevor eine Kaltverformung stattgefunden hat. Das Endstück 4 greift bis zu einem bestimmten Punkt in ein Anschlussstück 6 ein, welches beispielsweise eine Muffe sein kann. Das Profil des Endstücks weist eine Nut 8 zur Aufnahme eines Dichtungselements 10 auf. Das Dichtungselement 10 in diesem Beispiel ist ein O-Ring, der in der Nut 8 angeordnet ist. In Fig. 1 liegt der O-Ring 10 an dem Nutgrund 12 und an der dem offenen Ende 14 des Endstücks 4 zugewandten Nutwand 16 an und befindet sich somit in einer vorgesehenen Position in der Nut 8. Eine weitere vorgesehene Position des O-Rings 10 in der Nut 8 wäre beispielsweise gegeben, wenn der O-Ring 10 an dem Nutgrund 12 und an der dem offenen Ende 14 des Endstücks 4 abgewandten Nutwand 30 anliegen würde.

Das Profil des in Fig. 1 gezeigten rohrförmigen Bauteils 2 weist außerdem noch Halteelemente 18 und Abstandshalter 20 auf. Die zwischen den Halteelementen 18 angeordneten Zwischenräume 22 werden im Zuge des Kaltverformens mit den verformten Abschnitten des aufgesteckten Anschlussstücks 6 zumindest teilweise aufgefüllt. Dadurch wird nach dem Kaltverformen eine kraftschlüssige Verbindung zwischen dem rohrförmigen Bauteil 2 und dem Anschlussstück 6 hergestellt. Die Abstandshalter 20 bewirken, dass vor dem Verformen ein Spalt 24 zwischen der profilierten Außenumfangsfläche des Endstücks 4, insbesondere zwischen dem O-Ring 10, und der Innenumfangsfläche des Anschlussstücks 6 besteht. Damit kann vor der Verformung ein in dem rohrförmigen Bauteil 2 und dem Anschlussstück 6 geführtes, druckbeaufschlagtes Fluid durch den Spalt 24 entweichen (Pfeile, 26) und einem Installateur die fehlende Verformung anzeigen. Handelt es sich bei dem Fluid um eine Flüssigkeit, könnten Teile der Flüssigkeit aus der Verbindung heraustropfen, so dass schon der Augenschein genügen würde, um die fehlende Verformung festzustellen.

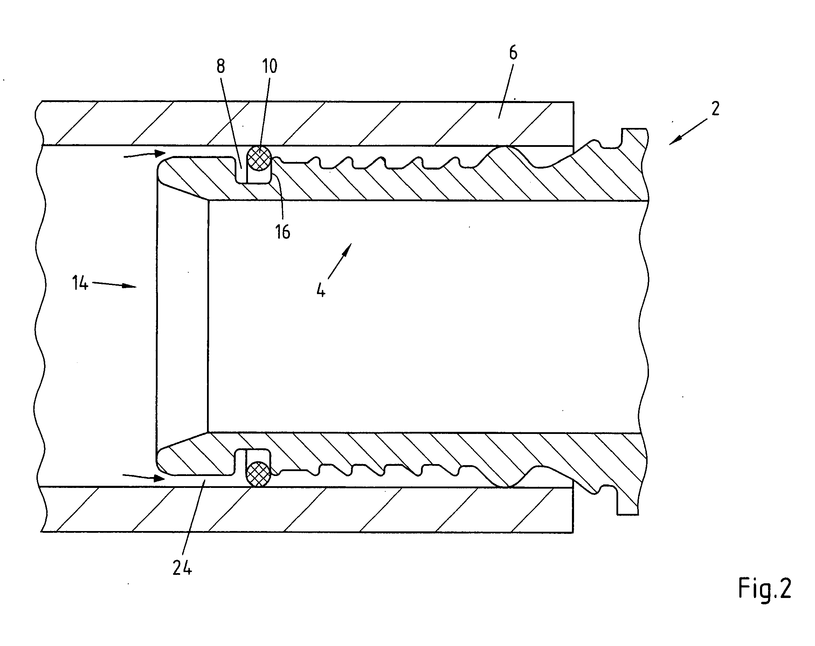

Fig. 2 zeigt den Zustand des in Fig. 1 dargestellten rohrförmigen Bauteils 2 vor der Verformung, wenn der O-Ring 10 druckbedingt aus seiner vorgesehenen Position in der Nut 8 ausgelenkt wird. In einem solchen Fall kann der O-Ring 10, wie in diesem Beispiel gezeigt, so gedehnt werden, dass er an einem der Nut 10 gegenüberliegenden Abschnitt der Innenumfangsfläche des Anschlussstücks 6 und zumindest teilweise an der dem offenen Ende 14 des Endstücks 4 zugewandten Nutwand 16 anliegt. Durch diese Position wird der Spalt 24, durch den das Fluid wie in Fig. 1 dargestellt entweichen kann, geschlossen und die Verbindung zwischen rohrförmigen Bauteil 2 und Anschlussstück 6 wird unbeabsichtigt abgedichtet. Dieser Zustand kann beispielsweise so lange anhalten, wie das in dem rohrförmigen Bauteil 2 und dem Anschlussstück 6 geführte Fluid mit einem Druck beaufschlagt ist. Diese temporäre Abdichtung könnte also so lange anhalten, dass ein Installateur die fehlende Verformung des rohrförmigen Bauteils 2 und des Anschlussstücks 6 nicht bemerkt und von einer bereits vorgenommen Verformung ausgeht.

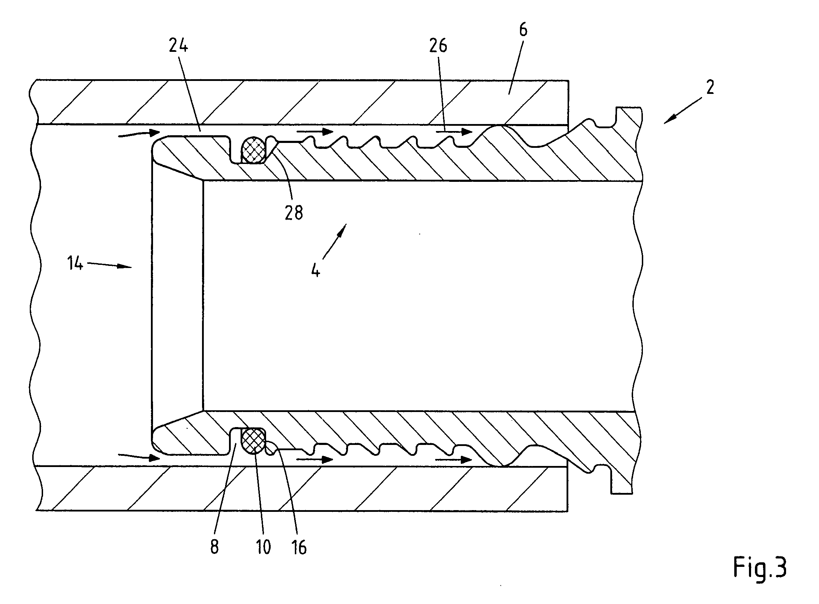

Fig. 3 zeigt ein rohrförmiges Bauteil 2 vor dem Verformen, das dem in Fig. 1 gezeigten ähnlich ist. Das rohrförmige Bauteil 2 kann beispielsweise aus einem Kunststoff ausgebildet sein. Erfindungsgemäß wurde im Unterschied zu dem in Fig. 1 und 2 gezeigten Beispiel an der dem offenen Ende 14 des profilierten Endstücks 4 zugewandten Nutwand 16 eine Ausnehmung 28 eingearbeitet. Es können natürlich auch mehrere voneinander beabstandete Ausnehmungen 28 vorgesehen sein. Durch die Ausnehmung 28 wird ein Ausweichkanal für das in dem rohrförmigen Bauteil 2 und dem Anschlussstück 6 geführten Fluid geschaffen, durch den das druckbeaufschlagte Fluid entweichen kann, wenn der O-Ring 10 auf Grund der Druckverhältnisse aus seiner, wie in Fig. 3 dargestellten, vorgesehenen Position in der Nut 8 ausgelenkt werden sollte. In Fig. 3 ist der O-Ring 10 noch nicht aus seiner vorgesehenen Position in der Nut 8 ausgelenkt. Dementsprechend kann das druckbeaufschlagte Fluid durch den Spalt 24 zwischen der Innenumfangsfläche des Anschlussstücks 6 und der Außenumfangsfläche des Endstücks 4, insbesondere des O-Rings 10, entweichen (Pfeile, 26).

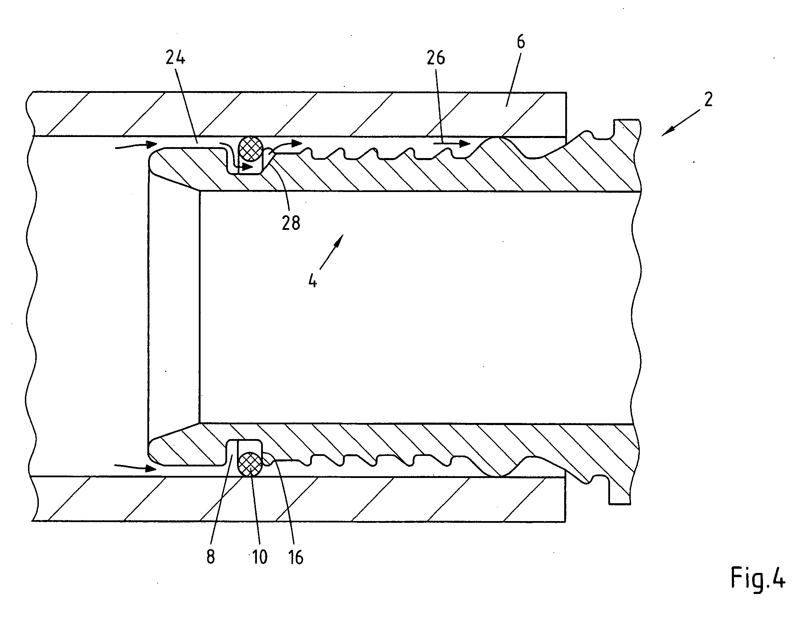

Fig. 4 zeigt nun das in Fig. 3 dargestellte rohrförmige Bauteil 2, wenn es zu einer Auslenkung des O-Rings 10 kommt und damit der Spalt 24, durch den das Fluid wie in Fig. 3 gezeigt entweichen konnte, geschlossen wird. Die Auslenkung des O-Rings 10 kann insbesondere dann auftreten, wenn das in dem rohrförmigen Bauteil 2 und dem Anschlussstück 6 geführte Fluid mit einem Druck beaufschlagt ist, der mindestens 4 bar beträgt. Allerdings ist in diesem Beispiel die Öffnung der Ausnehmung 28 in der Nutwand 16, die vorher von dem O-Ring 10 bedeckt wurde, zumindest teilweise bloßgelegt. Durch die Ausnehmung 28 in der Nutwand 16 kann somit eine Verbindung zwischen der Nut 8 und dem Spalt 24 zwischen der Innenumfangsfläche des Anschlussstücks 6 und der Außenumfangsfläche des Endstücks 4 geschaffen werden. Das Fluid kann somit diesen Ausweichkanal nehmen, um zumindest an einer Stelle zwischen Anschlussstück 6 und profiliertem Endstück 4 zu entweichen (Pfeile, 26). Eine Leckage vor dem Verformen ist also stets gewährleistet, selbst wenn der O-Ring 10 druckbedingt aus seiner vorgesehenen Position in der Nut 8 ausgelenkt werden sollte. Einem Installateur ist damit die Möglichkeit gegeben, gegebenenfalls unter Einsatz technischer Hilfsmittel wie Gassensoren, auf die Leckage und auf die fehlende Verformung aufmerksam zu werden.

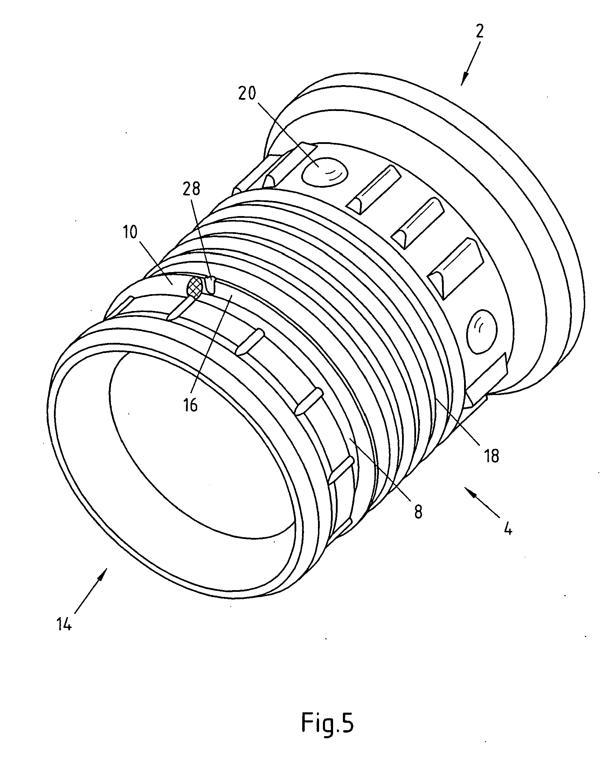

Fig. 5 zeigt eine isometrische Ansicht eines rohrförmigen Bauteils 2 mit dem Endstück 4, einer Nut 8, einem in der Nut 8 angeordneten Dichtungselement 10 (nicht vollständig dargestellt), einer Ausnehmung 28 in der dem offenen Ende 14 des Endstücks 4 zugewandten Nutwand 16, mehreren Halteelementen 18 und mehreren Abstandshaltern 20.

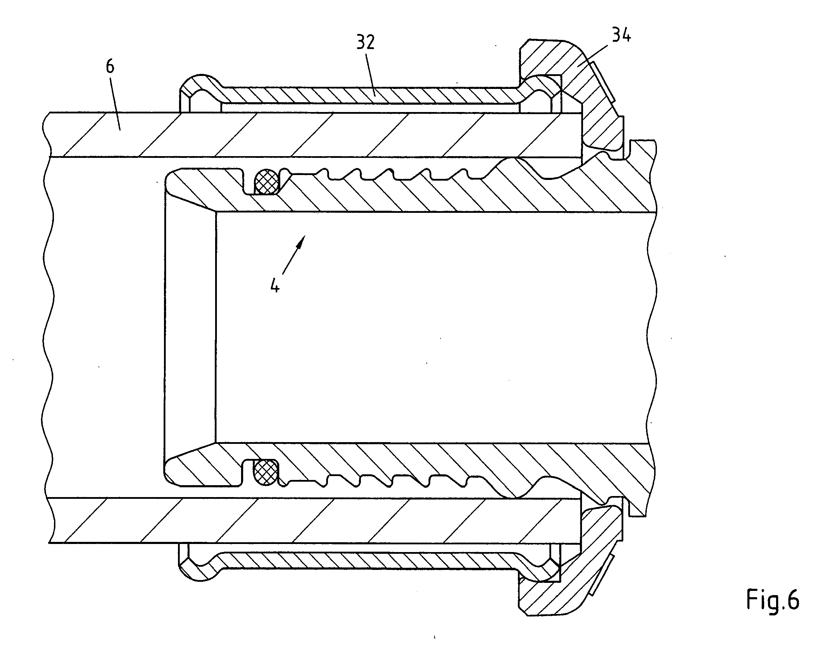

Fig. 6 zeigt das Ausführungsbeispiel des rohrförmigen Bauteils aus Fig. 3, kurz bevor es verformt wird. Über das Anschlussstück 6 wurde im Bereich des Endstücks 4 eine Hülse 32 geschoben. Die Hülse 32 bietet einem Presswerkzeug (nicht dargestellt) einen sicheren Ansatzpunkt. Um eine ungewollte Verschiebung der Hülse 32 an dem Anschlussstück 6 zu vermeiden, wird die Hülse 32 in diesem Beispiel einseitig mit einem Haltering 34 fixiert.

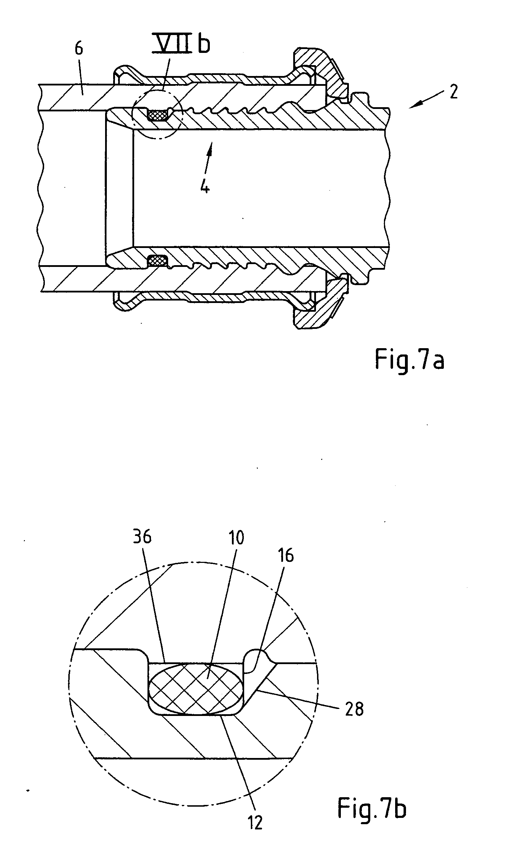

Es ergibt sich aus den Fig. 7a, 7b, dass beim Kaltverformen des Anschlussstücks 6 und des in das Anschlussstück 6 eingreifenden Endstücks 4 des rohrförmigen Bauteils 2 die Verformung vorzugsweise so weit betrieben werden sollte, dass das Dichtungselement 10, beispielsweise der O-Ring, eng sowohl an der Innenumfangsfläche 36 des verformten Anschlussstücks als auch an der Außenumfangsfläche des Endstücks 4 des rohrförmigen Bauteils 2, insbesondere am Nutgrund 12, anliegt. Denn dann sind der vor dem Verformen vorgesehene Spalt 24 als auch die vor der Verformung vorgesehene Ausnehmung 28 in der Nutwand 16, soweit sie nach dem Verformen noch vorhanden sein sollten, so von dem Dichtungselement 10 abgedeckt, dass eine effektive fluiddichte Verbindung geschaffen wird.

## Patentansprüche

1. Anordnung aus einem rohrförmigen Bauteil (2) und einem Anschlussstück (6) zur Herstellung einer fluiddichten, kraftschlüssigen Verbindung,
- wobei das rohrförmige Bauteil (2) ein ein Profil aufweisendes Endstück (4) und
- eine an dem Endstück (4) angeordnete Nut (8) zur Aufnahme eines Dichtungselements (10) aufweist, und
- wobei das Endstück (4) in das Anschlussstück (6) eingreift,
**dadurch gekennzeichnet, dass**
- zwischen der Innenumfangsfläche des Anschlussstücks (6) und der Außenumfangsfläche des Endstücks (4) entlang der gesamten Erstreckung des Endstücks (4) ein Spalt (24) ausgebildet ist,
- dass die dem offenen Ende (14) des Endstücks (4) zugewandte Nutwand (16) mindestens eine Ausnehmung (28) aufweist, derart,
- dass das druckbeaufschlagte Fluid durch den Spalt (24) oder durch den Spalt (24) und die Ausnehmung (28) entweichen kann.

2. Anordnung nach Anspruch 1,
**dadurch gekennzeichnet, dass**
das Profil und die Nut (8) an der Außenfläche des Endstücks (4) ausgebildet sind.

3. Anordnung nach Anspruch 1 oder 2,
**dadurch gekennzeichnet, dass** das rohrförmige Bauteil (2) aus einem Kunststoff ausgebildet ist.

4. Anordnung nach einem der Ansprüche 1 bis 3,
**dadurch gekennzeichnet, dass** die Nutwand (16) mindestens zwei voneinander beabstandete Ausnehmungen (28) aufweist.

5. Anordnung nach einem der Ansprüche 1 bis 4,
**dadurch gekennzeichnet, dass** das Endstück (4) für einen Leitungsdruck von mindestens 4 bar ausgelegt ist.

## Claims

1. Arrangement consisting of a tubular component (2) and a connection piece (6) for producing a fluid-tight, force-fit connection,
- wherein the tubular component (2) has an end piece (4), the end piece (4) having a profile, and
- an indentation (8) arranged on the end piece (4) for accommodating a sealing element (10), and
- wherein the end piece (4) engages with the connection piece (6),
**characterised in that**
- a gap (24) is formed between the inner circumferential surface of the connection piece (6) and the outer circumferential surface of the end piece (4) along the entire extension of the end piece (4),
- **in that** the indentation wall (16) facing the open end (14) of the end piece (4) has at least one recess (28) such
- that the pressurised fluid can escape through the gap (24) or through the gap (24) and the recess (28).

2. Arrangement according to Claim 1, **characterised in that** the profile and the indentation (8) are formed on the outer surface of the end piece (4).

3. Arrangement according to Claim 1 or 2, **characterised in that** the tubular component (2) is formed from a plastic material.

4. Arrangement according to any one of Claims 1 to 3, **characterised in that** the indentation wall (16) has at least two recesses (28) spaced apart from one another.

5. Arrangement according to any one of Claims 1 to 4, **characterised in that** the end piece (4) is designed for a line pressure of at least 4 bar.

## Revendications

1. Arrangement formé par un composant en forme de tube (2) et une pièce de raccordement (6), pour la réalisation d'une liaison par adhérence, étanche aux fluides,
- sachant que le composant en forme de tube (2) est doté d'une pièce d'extrémité (4), qui présente un profil, et
- une rainure (8), disposée sur la pièce d'extrémité (4), pour la réception d'un élément d'étanchéité (10), et
- sachant que la pièce d'extrémité (4) s'engage dans la pièce de raccordement (6),
**caractérisé en ce que**
- entre la surface périphérique, intérieure de la pièce de raccordement (6) et la surface périphérique extérieure de la pièce d'extrémité (4), une fente (24) est formée le long de toute l'étendue de la pièce d'extrémité (4),
- la paroi (16) de la rainure, orientée vers l'extrémité ouverte (14) de la pièce d'extrémité (4), est dotée d'au moins un évidement (28), de sorte que
- le fluide, soumis à une pression, puisse s'échapper par la fente (24) et l'évidement (28).

2. Arrangement selon la revendication 1, **caractérisé en ce que** le profil et la rainure (8) sont formés sur la face extérieure de la pièce d'extrémité (4).

3. Arrangement selon revendication 1 ou 2, **caractérisé en ce que** le composant en forme de tube (2) est réalisé en matière synthétique.

4. Arrangement selon l'une des revendications 1 à 3, **caractérisé en ce que** la paroi (16) de la rainure est dotée d'au moins deux évidements (28) distancés l'un de l'autre.

5. Arrangement selon l'une des revendications 1 à 4, **caractérisé en ce que** la pièce d'extrémité (4) est conçue pour une pression de conduite d'au moins 4 bar.
